(19) Europäisches Patentamt
European Patent Office
Office européen des brevets

(11) EP 0 463 467 B1

(12) **EUROPÄISCHE PATENTSCHRIFT**

(45) Veröffentlichungstag und Bekanntmachung des Hinweises auf die Patenterteilung:
**27.03.1996 Patentblatt 1996/13**

(51) Int Cl.[6]: **C08L 69/00**, C08K 5/523
// (C08L69/00, 51:04, 27:18, 83:04)

(21) Anmeldenummer: **91109575.0**

(22) Anmeldetag: **11.06.1991**

# (54) Thermoplastische Polycarbonatformmassen mit flammwidrigen Eigenschaften

Thermoplastic polycarbonate moulding compositions with flame retarding properties

Masses de moulage thermoplastiques de polycarbonate ayant des propriétés de résistance à la flamme

(84) Benannte Vertragsstaaten:
**DE FR GB IT**

(30) Priorität: **22.06.1990 DE 4019903**
**28.08.1990 DE 4027104**

(43) Veröffentlichungstag der Anmeldung:
**02.01.1992 Patentblatt 1992/01**

(73) Patentinhaber: **BAYER AG**
**D-51368 Leverkusen (DE)**

(72) Erfinder:
- **Fuhr, Karl, Dr.**
  **W-4150 Krefeld 1 (DE)**
- **Müller, Friedemann, Dr.**
  **W-4040 Neuss (DE)**
- **Ott, Karl-Heinz, Dr.**
  **W-5090 Leverkusen 1 (DE)**

(56) Entgegenhaltungen:
**EP-A- 0 022 979** **EP-A- 0 207 369**
**EP-A- 0 351 648** **DE-A- 2 702 709**

- **PATENT ABSTRACTS OF JAPAN vol. 12, no. 186 (C-500)(3033) 31. Mai 1988**
- **PATENT ABSTRACTS OF JAPAN vol. 11, no. 24 (C-399)(2471) 23. Januar 1987**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 463 467 B1

## Beschreibung

Gegenstand der vorliegenden Erfindung sind thermoplastische Formmassen bestehend aus

A) 40 - 90 Gewichtsteilen, vorzugsweise 50 - 70 Gewichtsteilen, eines thermoplastischen aromatischen Polycarbonats,

B) 1 - 25 Gewichtsteilen, vorzugsweise 5 - 20 Gewichtsteilen, Pfropfpolymerisat hergestellt aus

B.1) 5 - 70 Gewichtsteilen, vorzugsweise 15 - 60 Gewichtsteilen, einer Mischung aus:

B.1.1) 50 - 95 Gew.-% Styrol, α-Methylstyrol, Halogenstyrol, kernalkyliertem Styrol, Methylmethacrylat oder Mischungen daraus, und

B.1.2) 5 - 50 Gew.-% (Meth)Acrylnitril, Methylmethacrylat, Maleinsäureanhydrid, N-substituiertem Maleinimid oder Mischungen daraus, auf

B.2) 30 - 95 Gewichtsteilen, vorzugsweise 40 - 85 Gewichtsteilen, eines Kautschuks mit einer Glastemperatur TG ≤ 10°C aus z.B. Polybutadien-, Alkylacrylat-, EPDM(Ethylen-Propylen-Dien-Mono-mer)- oder Silikonkautschuken,

C) 1 - 25 Gewichtsteilen, vorzugsweise 2 - 20 Gewichtsteilen, bezogen jeweils auf 100 Gewichtsteile Gesamtgewicht aus A) und B) einer Phosphorverbindung,

D) 0,05 - 10 Gewichtsteilen, bezogen auf 100 Gewichtsteile Gesamtgewicht aus A) und B), Antidrippingmittel, bestehend aus

D.1) 0,05 - 5 Gewichtsteilen, vorzugsweise 0,1 - 1,0 Gewichtsteilen, bezogen auf 100 Gewichtsteile A) und B) eines Tetrafluorethylenpolymerisats mit mittleren Teilchengrößen von 0,05 - 20 µm und einer Dichte von 1,2 - 1,9 g/cm$^3$, wobei vorzugsweise eine koagulierte Mischung von Emulsionen des Tetrafluorethylenpolymerisats D.1) mit Emulsionen von Pfropfpolymerisat B) eingesetzt wird, worin das Gewichtsverhältnis Pfropfpolymerisat B) zum Tetrafluorethylenpolymerisat D.1) zwischen 95 : 5 und 60 : 40 liegt und der Gehalt an Cofällung von B) und D.1), bezogen auf 100 Gewichtsteile A) und B), zwischen 0,1 und 20,0 Gewichtsteilen liegt, und/oder

D.2) 0,1 - 10 Gewichtsteilen, vorzugsweise 0,2 - 3,0 Gewichtsteilen, bezogen auf 100 Gewichtsteile A) und B), eines Silikonharzes, der Summenformel (VI),

$$R_xSi(OR')_yO_{\frac{4-x-y}{2}} \qquad \text{(VI)}$$

worin

R für einen einwertigen Kohlenwasserstoffrest steht, der gegebenenfalls selbst substituiert sein kann, insbesondere aber eine Methylgruppe und/oder Phenylgruppe bedeutet,

R' eine Alkylgruppe oder ein Wasserstoffrest ist,

x einen Wert von 0,75 bis 1,75 und

y einen Wert von 0,0001 bis 0,5 besitzen und worin das Silikonharz aufgebaut ist aus Einheiten der Formel $SiO_{4/2}$, $RSiO_{3/2}$, $R_2SiO_{2/2}$ und/oder $R_3SiO_{1/2}$, wobei vorzugsweise eine koagulierte Mischung von Emulsionen des Silikonharzes D.2), gegebenenfalls auch eine Emulsion einer Lösung von ihm z.B. in Toluol, mit Emulsionen von Pfropfpolymerisat B) eingesetzt wird, worin das Gewichtsverhältnis Pfropfpolymerisat B) zum Silikonharz D.2) zwischen 99,9 : 0,1 und 50 : 50 Gew.-% liegt und der Gehalt an Cofällung von B) und D.2), bezogen auf 100 Gewichtsteile A) und B), zwischen 0,1 und 30,0 Gewichtsteilen liegt, die dadurch gekennzeichnet sind, daß sie als Phosphorverbindungen C) solche der Formel (I) enthalten,

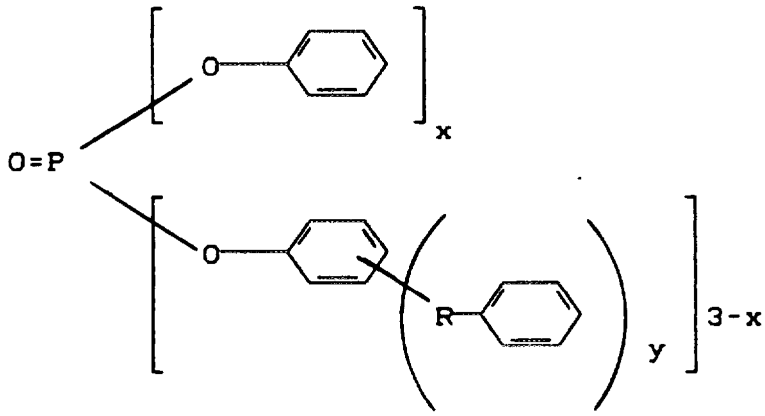

(I)

worin

R eine direkte Bindung, eine

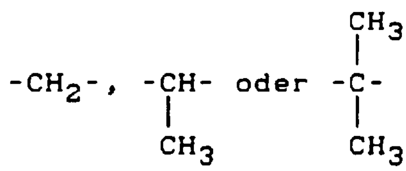

Gruppe ist,

x gleich 0 oder 1 oder 2 für den Fall y gleich 1 ist oder

x gleich 2 für den Fall y gleich 2 ist und die Aromaten auch Alkyl substituiert sein können.

Polycarbonatformmassen, die Phosphatester der Formel (II) enthalten,

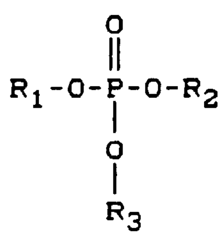

(II)

worin $R_1$, $R_2$ und $R_3$ gleich oder verschieden und $C_1$-$C_{20}$-Kohlenwasserstoffreste sind, wobei mindestens zwei der Reste $R_1$, $R_2$ und $R_3$ substituierte oder unsubstituierte Arylreste darstellen, sind bekannt, (Siehe DE-OS 3 429 481 (Le A 23 063) und DE-OS 3 430 234 (Le A 22 925). Die Verbindungen der Formel (I) kommen darin jedoch nicht vor.

Polycarbonatformmassen, die Phosphorverbindungen der Formel (III) enthalten,

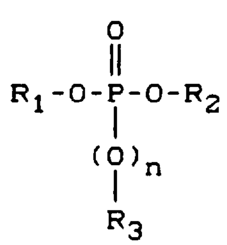

(III)

worin $R_1$, $R_2$ und $R_3$ unabhängig voneinander ein gegebenenfalls halogeniertes $C_1$-$C_8$-Alkyl oder ein gegebenenfalls halogeniertes $C_6$-$C_{20}$-Aryl und "n" 0 oder 1 ist, sind ebenfalls bekannt. (Siehe EP-OS 0 174 493 (Le A 23 043-EP), DE-OS 3 444 869 (Le A 23 527), DE-OS 3 444 868 (Le A 23 502), DE-OS 3 516 807 (Le A 23 790), DE-OS 3 521 888 (Le A 23 877), DE-OS 3 523 316 (Le A 23 927), DE-OS 3 523 314 (Le A 23 940), DE-OS 3 545 609 (Le A 24 039),

DE-OS 3 615 768 (Le A 24 500), DE-OS 3 617 511 (Le A 24 501), DE-OS 3 628 904 (Le A 24 683) und DE-OS 3 629 546 (Le A 24 695)). Die Verbindungen der Formel (I) sind darin wiederum nicht genannt.

Nachteilig bei diesen Formmassen mit einem Gehalt an Phosphaten der Formeln (II) und (III) ist vorwiegend, daß die in diesen Literaturstellen beschriebenen Phosphorsäureester unter Herstell- und Verarbeitungsbedingungen teilweise flüchtig sind. Eine Molekulargewichtserhöhung der Phosphate durch Verlängerung der Alkylketten an Aromaten reduziert im allgemeinen kaum die Flüchtigkeit, führt jedoch zu einer Wirksamkeitsminderung der Phosphate für flammwidrige Einstellungen, da der Phosphorgehalt abnimmt. Zur Wiederherstellung der flammwidrigen Eigenschaften müssen daher größere Mengen an Phosphoradditiven eingesetzt werden, die z.B. die Vicattemperatur in unerwünschter Weise herabsetzen.

Bekannt ist auch, Polycarbonatformmassen durch Polyphosphate flammwidrig auszurüsten. (Siehe US-Patente 4 463 130 (Le A 21 835) und 4 481 338 (Le A 21 841)).

Derartige Formmassen haben jedoch den Nachteil, daß sie, da sie mit polymeren Phosphaten versetzt sind, nicht das gewünschte hohe Maß an Fließfähigkeit erreichen.

Phosphate vom 4-Phenylphenol sind als Flammschutzmittel bislang nur für PPO-Harzmassen, die bereits eine höhere inhärente Flammwidrigkeit besitzen und die gegebenenfalls Polystyrol-Harze enthalten können, beschrieben (siehe US-PS 4 683 255).

Aus der DE-OS 3 824 356 (Le A 26 015) sind Polycarbonatformmassen mit flammwidrigen Eigenschaften bekannt, die sich von den erfindungsgemäßen Polycarbonatformmassen unter anderem dadurch unterscheiden, daß sie zusätzlich thermoplastische Copolymerisate in Mengen von 10 bis 50 Gew.-Teilen, bezogen auf 100 Gewichtsteile aus Polycarbonat, Pfropfpolymerisat und Copolymerisat, enthalten.

Überraschend wurde gefunden, daß bei Verwendung der erfindungsgemäßen Phosphorsäureestern der Formel (I) in thermoplastischen Formmassen, die keine thermoplastische Copolymerisate, z.B. SAN enthalten, gute Eigenschaftswerte (Schlagzähigkeit, Oberflächenbeschaffenheit, Flammfestigkeit) erreicht werden, die Kerbschlagzähigkeit aber verbessert, die Neigung zum Verdampfen der Phosphorsäureester bei der Verarbeitung der Formmassen sowie die Migration bei Lagerung besonders in der Wärme entscheidend zurückgedrängt werden.

Die erfindungsgemäß mitverwendeten Pfropfpolymerisate enthalten herstellungsbedingt neben chemisch gebundenem SAN-Polymerisat chemisch nicht gebundenes SAN-Polymerisat. Diese Menge wird mit < 50 Gew.-%, bezogen auf die Gewichtsmenge an Monomeren B.1) in B), angesehen. Dieses Polymerisat verbleibt aber beim Compoundieren im Bereich des Pfropfpolymerisats, es wird nicht wie als Granulat eingesetztes SAN beim Compoundieren in der gesamten Formmasse verteilt. Im vorliegenden Fall beträgt diese Menge maximal 8,75 Gewichtsteile, bezogen auf 100 Gewichtsteile der Komponenten A) + B).

Die erfindungsgemäß geeigneten Polycarbonate gemäß Komponente A) können sowohl Homopolycarbonate als auch Copolycarbonate aus den Diphenolen der Formel (IV) sein.

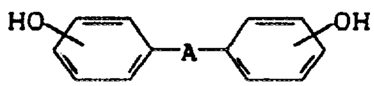

(IV)

Darüber hinaus können die Polycarbonate der Komponente A) insbesondere auch Copolycarbonate aus den Diphenolen (IV) und (IVa) sein,

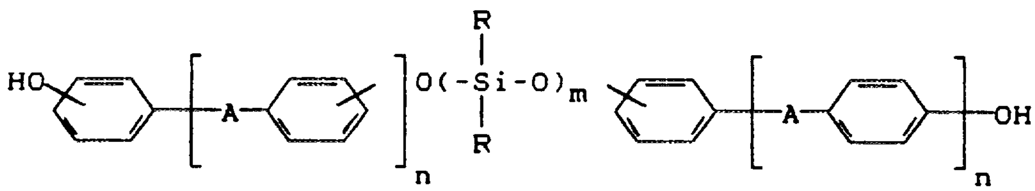

(IVa)

worin

A eine Einfachbindung, $C_1$-$C_5$-Alkylen, ein $C_2$-$C_5$-Alkyliden, ein $C_5$-$C_6$-Cycloalkyliden, das noch durch Methylgruppen substituiert sein kann, -O-, -S- oder -$SO_2$- ist, die aromatischen Bereiche durch Methylgruppen oder Halogenatome substituiert sein können, n = 1 oder null ist, die R's gleich oder verschieden sind und ein lineares $C_1$-$C_{20}$-Alkyl, verzweigtes $C_3$-$C_{20}$-Alkyl oder $C_6$-$C_{20}$-Aryl, vorzugsweise $CH_3$, sind und m eine Zahl zwischen 5 und 100, vorzugsweise

zwischen 20 und 80 ist, und wobei der Gewichtsanteil an Diphenolen der Formel (IVa) in den Copolycarbonaten jeweils so bemessen ist, daß der Gehalt an Diorganosiloxy-Einheiten (V)

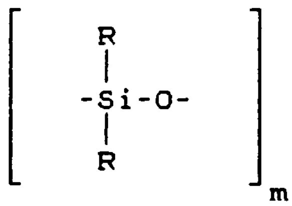

(V)

in Polycarbonat A) zwischen 1 und 25 Gew.-%, vorzugsweise zwischen 2,5 und 25 Gew.-%, beträgt.

Die Polycarbonate gemäß Komponente A) können sowohl linear als auch verzweigt sein, sie können aromatisch gebundenes Halogen, vorzugsweise Brom und/oder Chlor enthalten, sie können aber auch frei von aromatisch gebundenem Halogen, also halogenfrei, sein.

Die Polycarbonate der Komponente A) können sowohl einzeln als auch im Gemisch eingesetzt werden. In den Fällen, in denen die Komponente A) ein Gemisch aus siloxanhaltigen Polycarbonaten und siloxanfreien Polycarbonaten ist, können die siloxanhaltigen Polycarbonate auch einen Gehalt an Diorganosiloxy-Einheiten von mehr als 25 Gew.-% enthalten, sofern durch die Abmischung mit den siloxanfreien Polycarbonaten der Gehalt im Polycarbonatgemisch wiederum zwischen 1 und 25 Gew.-% liegt.

Die Diphenole der Formel (IV) sind entweder literaturbekannt oder Gegenstand der deutschen Patentanmeldung P 3 842 931.4 (Le A 26 318) oder nach literaturbekannten Verfahren herstellbar; Polydiorganosiloxane mit Hydroxyaryloxy-Endgruppen gemäß Formel (IVa) sind ebenfalls bekannt (siehe z.B. US-Patent 3 419 634) bzw. nach literaturbekannten Verfahren herstellbar.

Die Herstellung der erfindungsgemäß geeigneten Polycarbonate gemäß Komponente A) ist literaturbekannt oder Gegenstand der deutschen Patentanmeldung P 3 842 931.4 (Le A 26 318) und kann z.B. mit Phosgen nach dem Phasengrenzflächenverfahren oder mit Phosgen nach dem Verfahren in homogener Phase (dem sogenannten Pyridenverfahren) erfolgen, wobei das jeweils einzustellende Molekulargewicht in bekannter Weise durch eine entsprechende Menge an bekannten Kettenabbrechern erzielt wird. Die Darstellung von polydiorganosiloxanhaltigen Polycarbonaten ist z.B. in DE-OS 3 334 782 beschrieben.

Geeignete Kettenabbrecher sind z.B. Phenol oder p-tert.-Butylphenol, aber auch langkettige Alkylphenole wie 4-(1,3-Tetramethyl-butyl)phenol gemäß DE-OS 2 842 005 oder Monoalkylphenole oder Dialkylphenole mit insgesamt 8 bis 20 C-Atomen in den Alkylsubstituenten gemäß deutscher Offenlegungsschrift 3 506 472, wie z.B. p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die Menge an einzusetzenden Kettenabbrechern beträgt im allgemeinen zwischen 0,5 und 10 Mol-%, bezogen auf die Summe der jeweils eingesetzten Diphenole (IV) und (IVa).

Die erfindungsgemäß geeigneten Polycarbonate gemäß Komponente A) können in bekannter Weise verzweigt sein, und zwar vorzugsweise durch den Einbau von 0,05 bis 2,0 Mol%, bezogen auf die Summe der eingesetzten Diphenole, an drei- oder mehr als dreifunktionellen Verbindungen, z.B. solchen mit drei oder mehr als drei phenolischen OH-Gruppen.

Sie haben mittlere Gewichtsmittelmolekulargewichte ($M_w$, gemessen z.B. durch Ultrazentrifugation oder Streulichtmessung) von 10 000 bis 200 000, vorzugsweise von 20 000 bis 80 000.

Geeignete Diphenole der Formel (IV) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)propan, 2,2-Bis (4-hydroxy-3,5-dichlorphenyl)propan, 2,2-Bis-(4 hydroxy-3,5-dibromphenyl)-propan, 1,1-Bis-(4 hydroxyphenyl)-cyclohexan oder 1,1-Bis-(4-hydroxyphenyl)-3,3,5-trimethylcyclohexan.

Bevorzugte Diphenole der Formel (IV) sind 2,2-Bis-(4-hydroxyphenyl)propan und 1,1-Bis(4-hydroxy-phenyl)-cyclohexan. Es können auch Mischungen von Diphenolen eingesetzt werden.

Geeignete Diphenole der Formel (IVa) sind solche, in denen R Methyl, Ethyl, Propyl, n-Butyl, tert.-Butyl und Phenyl ist. Es können auch Mischungen von Diphenolen der Formel (IVa) eingesetzt werden.

Bevorzugte Diphenole der Formel (IVa) sind die der Formel (IVb),

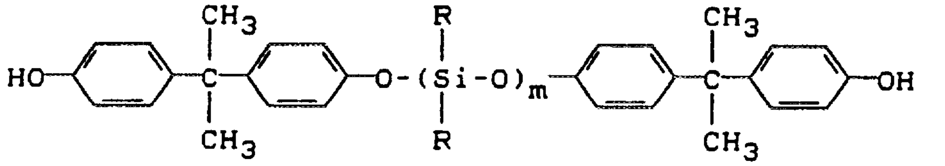

(IVb)

worin

die R's gleich sind und die vorstehend genannte Bedeutung haben, also Methyl etc. und Phenyl bedeuten und m wiederum eine ganze Zahl zwischen 5 und 100, vorzugsweise zwischen 20 und 80, ist.

Bevorzugte Polydiorganosiloxan-Polycarbonat-Blockcopolymere sind Copolycarbonate der Diphenole der Formel (IV) mit Diphenolen der Formel (IVb).

Zur Herstellung der Pfropfpolymerisate gemäß Komponente B) geeignete Kautschuke sind insbesondere Polybutadiene, Polychloroprene, Polyisoprene, Styrol-Butadiencopolymerkautschuke, Acrylnitril-Butadien-Copolymerkautschuke mit Gelgehalten (gemessen bei 20°C) größer als 30 Gew.-%, Acrylatkautschuke, EPDM(Ethylen-Propylen-Dien-Monomer)Kautschuke und Silikonkautschuke. Geeignete Butadien-Styrol-Copolymerkautschuke können bis zu 30 Gew.-%, bezogen auf Kautschukgewicht, eines niederen Alkylesters von Acryl- oder Methacrylsäure (beispielsweise Methylmethacrylat, Ethylacrylat, Methylacrylat) enthalten.

Geeignete Alkylacrylatkautschuke sind solche auf Basis von $C_1$-$C_8$-Alkylacrylaten, insbesondere Ethyl-, Butyl-, Ethylhexylacrylat. Diese Alkylacrylatkautschuke können gegebenenfalls bis zu 30 Gew.-%, bezogen auf Kautschukgewicht, Monomere wie Vinylacetat, Acrylnitril, Styrol, kernalkyliertes Styrol, Halogenstyrol, Methylmethacrylat und/oder Vinylether copolymerisiert enthalten. Diese Alkylacrylatkautschuke können weiterhin kleinere Mengen, vorzugsweise bis zu 5 Gew.-%, bezogen auf Kautschukgewicht, vernetzend wirkender ethylenisch ungesättigter Monomerer enthalten. Solche Vernetzer sind z.B. Alkylendioldi(meth)-acrylate, Polyesterdi-(meth)-acrylate, Divinylbenzol, Trivinylbenzol, Triallylcyanurat, Allyl-(meth)-acrylat, Butadien oder Isopren. Solche Alkylacrylate sind bekannt. Acrylatkautschuke als Pfropfgrundlage können auch Produkte sein, die einen vernetzten Dienkautschuk aus einem oder mehreren konjugierten Dienen, wie Polybutadien, oder ein Copolymerisat eines konjugierten Diens mit einem ethylenisch ungesättigten Monomerem, wie Styrol und/oder Arylnitril, als Kern enthalten,

Die erfindungsgemäß geeigneten Silikonkautschuke enthalten in dispergierter Form wenigstens teilvernetzte, teilchenförmige Silikonkautschuke mit im wesentlichen chemisch eingebauten Gruppen der allgemeinen Formeln

a) $R_2SiO_{2/2}$, $RSiO_{3/2}$, $R_2R^3SiO_{1/2}$, $SiO_{4/2}$ und gegebenenfalls Gruppen der Formel

b) $R^1CH{=}CH\text{-}(R^2)\text{-}$, gegebenenfalls in Kombination mit SH-Gruppen

wobei

R = einwertiger, gesättigter Kohlenwasserstoffrest, insbesondere $-CH_3$, $-C_6H_5$, gegebenenfalls durch -SH, Halogen, $-C_1$-$C_6$-Oxalkyl substituiert,

$R^1$ = H, $C_1$-$C_6$-Alkyl, insbesondere H, $CH_3$,

$R^2$ = Einfachbindung, $C_1$-$C_4$-Alkylen, insbesondere $-CH_2-$, $-C_2H_4-$ und

$R^3$ = R oder OH ist.

Die Mengen der einzelnen Siloxaneinheiten sind dabei so bemessen, daß auf 100 Mol-Einheiten der Formel $R_2SiO_{2/2}$ 0 bis 0,5 Mol-Einheiten $R_2R^3SiO_{1/2}$, 0 bis 10 Mol-Einheiten der Formel $RSiO_{3/2}$ und 0 bis 3 Mol-Einheiten der Formel $SiO_{4/2}$ vorhanden sind. In bevorzugten Silikonkautschuken sind mindestens 80 % aller Reste R $CH_3$-Gruppen.

Im Falle der Gruppe $R_2R^3SiO_{1/2}$ ist des weiteren möglich, daß einer der drei Reste R eine Hydroxylgruppe darstellt. Besonders bevorzugte Endgruppe ist die Dimethyl-hydroxysiloxyeinheit.

Die Silikonkautschuke enthalten die Gruppen b) in Mengen von 2 bis 10 Mol-%, bezogen auf die Gesamtheit aller Reste R.

Bevorzugte Kautschuke zur Herstellung der Pfropfpolymerisate B) sind Dien-, Alkylacrylat- und Silikonkautschuke.

Die Kautschuke liegen in den Pfropfpolymerisaten B) in Form wenigstens partiell vernetzter Teilchen einer mittleren Teilchengröße von 0,1 bis 3,0 µm, insbesondere 0,2 bis 0,6 µm vor. Sie sind wenigstens teilvernetzt , d.h. sie besitzen Gelgehalte von größer 20 Gew.-%, besonders größer 50 Gew.-%, besonders bevorzugt im Bereich von 73 bis 98 Gew.-%.

Die Pfropfpolymerisate B) werden durch radikalische Pfropfcopolymerisation der eingangs definierten Monomer-gemische aus B.1.1) und B.1.2) in Gegenwart der zu pfropfenden Kautschuke B.2) hergestellt und sind durchweg bekannt. Bevorzugte Herstellungsverfahren für die Pfropfpolymerisate B) sind Emulsions-, Lösungs-, Masse-oder Suspensionspolymerisation, Besonders bevorzugte Pfropfpolymerisate B) sind die sogenannten ABS-Polymerisate.

Die erfindungsgemäß geeigneten Phosphorverbindungen gemäß Komponente C) sind generell nach bekannten Verfahren herstellbar (siehe beispielsweise Ullmann, Enzyklopädie der technischen Chemie, Bd. 18, S.301 ff, 1979; Houben-Weyl, Methoden der Organischen Chemie, Bd. 12/1, S.43; Beilstein, Bd. 6, S.177).

Die aromatischen Bereiche der erfindungsgemäßen Phosphorverbindungen können Alkyl substituiert sein, wobei die Kohlenstoffkette bis zu etwa 4 Kohlenstoffatome enthalten kann.

Erfindungsgemäß geeignete Phosphorverbindungen gemäß Komponente C), Formel I, sind beispielsweise Phosphorsäure-bis-phenyl-(4-phenylphenyl)-ester, Phosphorsäure-phenyl-bis-(4-phenylphenyl)-ester, Phosphorsäure-tris-(4-phenylphenyl)-ester, Phosphorsäure-bis-phenyl-benzylphenyl-ester, Phosphorsäure-phenyl-bis-(benzylphenyl) -ester, Phosphorsäure-tris-(benzylphenyl)-ester, Phosphorsäure-phenyl-bis-( (1-phenylethyl )-phenyl )-ester, Phosphorsäure-bis-phenyl-((1-methyl-1-phenylethyl)-phenyl)-ester, Phosphorsäure-phenyl-bis-((1-methyl-1-phenylethyl) -phenyl)-ester, Phosphorsäure-bis-((1-methyl-1-phenylethyl)-phenyl)-ester, Phosphorsäure-phenyl-bis-(4-(1-phenylethyl)-2,6-dimethylphenyl)-ester, Phosphorsäure-2,4-di-benzylphenyl-bis-phenyl-ester, Phosphorsäure-2,4-di-(1-phenylethyl)-phenyl-bis-phenyl-ester und Phosphorsäure-2,4-di-(1-methyl-1-phenylethyl)-phenyl-bis-phenyl-ester.

Speziell bevorzugt sind Phosphorsäure-bis-phenyl-((1-methyl-1-phenylethyl)-phenyl)-ester, der Phosphorsäure-phenyl-bis-(4-phenylphenyl)-ester, Phosphorsäure-phenyl-bis-((1-phenylethyl)-phenyl)-ester, Phosphorsäure-phenyl-bis-((1-methyl-1-phenylethyl)-phenyl)-ester, Phosphorsäure-phenyl-bis-(benzylphenyl)-ester, Phosphorsäure-bis-( (1-methyl-1-phenylethyl)-phenyl)-ester, Phosphorsaure-2,4-di-(1-phenylethyl)-phenyl-bis-phenyl-ester und der Phosphorsäure-2,4-bis-(1-methyl-1-phenylethyl)-phenyl-bis-phenyl-ester. Verwendet werden die erfindungsgemäßen Phosphorsäureester auch in Mischung miteinander sowie in Mischung mit Polyphosphorsäureestern von Novolaken (US 4 105 825).

Die erfindungsgemäß geeigneten Tetrafluorethylenpolymerisate gemäß Komponente D.1) sind Polymere mit Fluorgehalten von 65 - 76 Gew.-%, vorzugsweise 70 - 76 Gew.-%. Beispiele sind u.a. Polytetrafluorethylen, Tetrafluorethylen-Hexafluorpropylen-Copolymere oder Tetrafluorethylencopolymerisate mit geringen Mengen fluorfreier copolymerisierbarer ethylenisch ungesättigter Monomerer. Derartige Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat, bei Drücken von 7 - 71 kg/cm$^2$ und bei Temperaturen von 0 - 200°C, vorzugsweise bei Temperaturen von 20 - 100°C (nähere Einzelheiten siehe beispielsweise US-Patent 2 393 967).

Die erfindungsgemäß geeigneten Silikonharze D.2) weisen die Summenformel (VI) auf,

$$R_xSi(OR')_yO_{\frac{4-x-y}{2}} \qquad (VI)$$

worin

R für einen einwertigen Kohlenwasserstoffrest steht, der gegebenenfalls selbst substituiert sein kann, insbesondere aber eine Methylgruppe und/oder Phenylgruppe bedeutet, worin R' eine Alkylgruppe oder ein Wasserstoffrest ist, x einen Wert von 0,75 bis 1,75 und y einen Wert von 0,0001 bis 0,5 besitzen und worin das Silikonharz aufgebaut ist aus Einheiten der Formel $SiO_{4/2}$, $RSiO_{3/2}$, $R_2SiO_{2/2}$ und/oder $R_3SiO_{1/2}$.

Bevorzugte Silikonharze D.2) der Formel (VI) sind solche, in denen mindestens 80 Gew.-% aller Reste R Methyl- und Phenylgruppen sind.

Nähere Einzelheiten zu den Silikonharzen D.2) sind in der deutschen Offenlegungsschrift 3 815 124 (Le A 25 925) beschrieben.

Durch den Zusatz von Tetrafluorethylenpolymerisaten oder Silikonharzen wird insbesondere das Abtropfen der Formmassenschmelze während des Brandvorgangs reduziert oder ganz verhindert.

Stellt man nun die erfindungsgemäßen Formmassen beispielsweise durch Schmelzcompoundierung in Knetern oder Extrudern aus den Komponenten A), B), C) sowie einem Polytetrafluorethylen-Pulver D.1) und/oder einem Silikonharz D.2) her, so werden zwar Formmassen hoher Flammwidrigkeit erhalten; Formkörper daraus haben aber manchmal eine mangelhafte Oberfläche, beispielsweise Mikrorisse oder Schlieren.

Das wird mit Sicherheit vermieden, wenn sehr feinteilige und zudem ungesinterte Tetrafluoretyhlenpolymerisate D.1) in Form einer koagulierten Mischung von Emulsionen der Tetrafluorethylenpolymerisate und/oder Emulsionen der Silikonharze D.2) mit Emulsionen der Pfropfpolymerisate B) eingesetzt werden.

Zur Herstellung einer entsprechenden Mischung mit Tetrafluorethylenpolymerisat D.1) wird zuerst eine wäßrige Emulsion (Latex) eines Pfropfpolymerisates B) mit mittleren Latexteilchengrößen von 0,05 bis 30,0 µm, insbesondere 0,02 bis 5,0 µm, ganz besonders von 0,2 bis 0,6 µm mit einer feinteiligen Emulsion eines Tetrafluorethylenpolymerisats D.1) in Wasser mit mittleren Teilchengrößen von 0,05 bis 20 µm, insbesondere von 0,08 bis 10 µm vermischt; geeignete Tetrafluorethylenpolymerisat-Emulsionen besitzen üblicherweise Feststoffgehalte von 30 bis 70 Gew.-%, insbesondere von 50 - 60 Gew.-%. Die einzusetzenden Emulsionen der Pfropfpolymerisate B) besitzen Feststoffgehalte von 20 bis 60 Gew.-%, insbesondere von 30 bis 45 Gew.-%.

In der Emulsionsmischung liegt das Gewichtsverhältnis Pfropfpolymerisat B) zum Tetrafluorethylenpolymerisat D.1) zwischen 95 : 5 und 60 : 40.

Anschließend wird die Emulsionsmischung in bekannter Weise koaguliert, beispielsweise durch Sprühtrocknung, Gefriertrocknung oder Koagulation mittels Zusatz von anorganischen oder organischen Salzen, Säuren, Basen oder organischen, mit Waser mischbaren Lösungsmitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die Herstellung der pulverförmigen Polymermischungen aus Silikonharz D.2) und Pfropfpolymerisat B) gemäß deutscher Offenlegungsschrift 3 815 124 (Le A 25 925)) erfolgt dadurch, daß man

I. eine Dispersion eines organischen, thermoplastischen Polymerisats B) mit einem mittleren Teilchendurchmesser ($d_{50}$) von 0,05 bis 30,0 µm, vorzugsweise von 0,05 bis 5,0 µm, ganz besonders von 0,2 bis 0,6 µm, und mit einem Feststoffgehalt von 20 Gew.-% bis 60 Gew.-%, bezogen auf Gewicht Dispersion der Komponente B), mit einer Emulsion eines Silikonharzes D.2) der Formel (VI) mit einem mittleren Teilchendurchmesser ($d_{50}$) von 0,05 bis 3 µm, vorzugsweise von 0,1 bis 1 µm, und mit einem Feststoffgehalt bis zu 60 Gew.-%, vorzugsweise von 30 Gew.-% bis 50 Gew.-%, bezogen auf Gewicht Emulsion der Komponente D.2) so innig und in solchen Mengenverhältnissen vermischt, daß praktisch keine Agglomeration der Teilchen stattfindet, und daß Mischungen von 0,1 Gew.-% bis 50 Gew.-%, vorzugsweise von 5 Gew.-% bis 40 Gew.-% und insbesondere von 8 Gew.-% bis 20 Gew.-% Silikonharz D.2) mit 99,9 Gew.-% bis 50 Gew.-%, vorzugsweise 95 Gew.-% bis 60 Gew.-% und insbesondere 92 Gew.-% bis 80 Gew.-% thermoplastischem Polymerisat B), bezogen auf Gesamtsumme aus Silikonharz D.2) und thermoplastischem Polymerisat B), vorliegen,

II. die so erhaltene Mischung bei 20°C bis 120°C und pH-Werten von 7 bis 2, vorzugsweise von 5 bis 3, unter Bildung einer feinteiligen Mischung der Komponenten B) und D.2) in bekannter Weise koaguliert und

III. nach Isolierung dieses Koagulats bei Temperaturen von 50°C bis 150°C, insbesondere von 80°C bis 120°C, in bekannter Weise trocknet.

Da der Einsatz der erfindungsgemäß zu verwendenden Pfropfpolymerisate B) durch Vormischung ihrer Emulsionen mit Emulsionen der Komponente D) erfolgt, ist die Herstellung der Komponente B) nach dem Verfahren der Emulsionspolymerisation am zweckmäßigsten. Das eingesetzte Verhältnis von Polytetrafluorethylen D.1) und Pfropfpolymerisat B) ist so zu wählen, daß der Gesamtgehalt an D.1) in der Mischung aus A), B), C) und D) zwischen 0,05 und 5,0 Gewichtsteilen, bevorzugt zwischen 0,1 und 1,0 Gewichtsteilen, liegt. Das entsprechende Verhältnis von Silikonharz D.2) zu Pfropfpolymerisat B) ist so zu wählen, daß der Gesamtgehalt an Silikonharz D.2) in der Mischung aus A), B), C) und D) zwischen 0,1 und 10,0 Gewichtsteilen, bevorzugt zwischen 0,2 und 3,0 Gewichtsteilen, liegt.

Die erfindungsgemäßen thermoplastischen Formmassen können gegebenenfalls weitere Thermoplasten wie Polysulfone, Polyethersulfone, Polyketone, Polyetherketone, Polyphenylenether, Polyarylensulfide sowie weitere Zusätze wie Stabilisatoren, Pigmente, Fließmittel, Entformungsmittel, Antistatika und/oder andere Flammschutzmittel wie Metall- oder Halogen-Verbindungen enthalten.

Gegenstand der vorliegenden Erfindung sind somit auch Polycarbonatformmassen bestehend aus den Komponenten A), B), C), D) und gegebenenfalls thermoplastischen Polysulfonen, thermoplastischen Polyethersulfonen, thermoplastischen Polyketonen, thermoplastischen Polyetherketonen, thermoplastischen Polyphenylenethern, thermoplastischen Polyarylensulfiden, Stabilisatoren, Pigmenten, Fließmitteln, Entformungsmitteln, Antistatika, und/oder anderen Flammschutzmitteln.

Die erfindungsgemäßen thermoplastischen Formmassen bestehend aus den Komponenten A), B), C), D), sowie gegebenenfalls thermoplastischen Polysulfonen, thermoplastischen Polyethersulfonen, thermoplastischen Polyketonen, thermoplastischen Polyetherketonen, thermoplastischen Polyphenylenethern, thermoplastischen Polyarylensulfiden, Stabilisatoren, Pigmenten, Fließmitteln, Entformungsmitteln, Antistatika und/oder anderen Flammschutzmitteln werden hergestellt, indem man die jeweiligen Bestandteile in bekannter Weise vermischt und die Temperaturen von 200 - 330°C in üblichen Aggregaten wie Innenknetern, Extrudern oder Doppelwellenschnecken schmelzcompoundiert oder schmelzextrudiert, oder indem man die Lösungen der jeweiligen der vorstehend genannten Bestandteile in geeigneten organischen Lösungsmitteln, beispielsweise in Chlorbenzol, mischt und die Lösungsgemische in üblichen Aggregaten, beispielsweise in Eindampfextrudern, eindampft.

Die Vermischung der einzelnen Bestandteile kann in bekannter Weise sowohl sukzessiv als auch simultan erfolgen, und zwar sowohl bei etwa 20°C (Raumtemperatur) als auch bei höherer Temperatur.

Gegenstand der vorliegenden Erfindung ist somit auch ein Verfahren zur Herstellung von thermoplastischen Polycarbonatformmassen bestehend aus den Komponenten A), B), C), D), gegebenenfalls Polysulfonen, Polyethersulfonen, Polyketonen, Polyetherketonen, Polyphenylenethern, Polyarylensulfide, Stabilisatoren, Pigmenten, Fließmitteln, Entformungsmitteln, Antistatika, und/oder andere Flammschutzmitteln, das dadurch gekennzeichnet ist, daß man die jeweiligen der vorstehend genannten Bestandteile in bekannter Weise vermischt und danach bei Temperaturen von 200°C bis 330°C in üblichen Aggregaten schmelzkompoundiert oder schmelzextrudiert, oder daß man die Lösungen der jeweiligen der vorstehend genannten Bestandteile in geeigneten organischen Lösungsmitteln mischt und die Lösungsgemische in üblichen Aggregaten eindampft.

Die Formmassen der vorliegenden Erfindung können zur Herstellung von Formkörpern jeder Art verwendet werden. Insbesondere können Formkörper durch Spritzguß hergestellt werden. Beispiele für herstellbare Formkörper sind: Gehäuseteile jeder Art (z.B. für Haushaltsgeräte und Büromaschinen) oder Abdeckplatten für den Bausektor, Teile für den Kfz-Sektor. Sie werden außerdem auf dem Gebiet der Elektrotechnik eingesetzt, weil sie sehr gute elektrische Eigenschaften besitzen.

Eine weitere Form der Verarbeitung ist die Herstellung von Formkörpern durch Tiefziehen oder Warmverformen zuvor durch Extrusion hergestellter Platten oder Folien.

Teilchengröße bedeutet immer mittlerer Teilchendurchmesser $d_{50}$, ermittelt durch Ultrazentrifugenmessungen nach W. Scholtan et al., Kolloid-Z. u. Z. Polymere 250 (1972) 782 - 796.

## Beispiele

Verwendete Materialien

I. Aromatisches Polycarbonat aus 10 Gew.-% Tetrabrombisphenol A und 90 Gew.-% Bisphenol A mit relativer Viskosität, gemessen in Methylenchlorid bei 25°C, von 1,284 (0,5 gew.-%ige Lösung).

II. Aromatisches Polycarbonat aus 100 Gew.-% Bisphenol A mit relativer Viskosität, gemessen in Methylenchlorid bei 25°C, von 1,284 (0,5 gew.-%ige Lösung).

III. Aromatisches oligomeres Carbonat aus 100 Gew.-% Tetrabrombisphenol A, BC-52-HP der Firma Great Lakes Chem. Corp., USA.

IV. Thermoplastisches Polymerisat aus Styrol und Acrylnitril mit einem Acrylnitrilgehalt von 29 Gew.-% und einem mittleren Molekulargewicht von 60 000.

V. ABS-Pfropfpolymerisat von 50 Gew.-% Styrol-Acrylnitril-Gemisch (im Verhältnis 72:28) auf 50 Gew.-% teilchenförmigem Polybutadien eines mittleren Teilchendurchmessers ($d_{50}$) von 0,4 $\mu$m, erhalten durch Emulsionspolymerisation.

VI. 10 Gew.-% Polytetrafluorethylen enthaltendes Polymerisat nach V. dadurch hergestellt, daß das ABS-Pfropfpolymerisat als Latex und das Polytetrafluorethylen als Dispersion gemischt, koaguliert und als Cofällung gemeinsam aufgearbeitet werden.

VII. 10 Gew.-% Silikonharz enthaltendes Polymerisat nach V. dadurch hergestellt, daß das Pfropfpolymerisat als Latex und das Silikonharz als Emulsion gemischt, koaguliert und als Cofällung gemeinsam aufgearbeitet werden.

VIII. Triphenylphosphat

IX. Phosphorsäure-phenyl-bis-((1-phenylethyl)-phenyl)-ester nach Beispiel 1 der deutschen Offenlegungsschrift 3 824 356 (Le A 26 015).

X. Phosphorsäure-2,4-di-(1-phenylethyl)-phenyl-bis-phenyl-ester nach Beispiel 1 der deutschen Patentanmeldung P 3 940 927:

XI. Gemischte Phosphorsäureester nach Beispiel 2 der deutschen Patentanmeldung P 3 940 927 (Le A 27 145).

### Beispiel 1

Herstellung von Phosphorsäure-2,4-di-(1-phenylethyl)-phenyl-bis-phenyl-ester

Zur Herstellung von 2,4-Di-(1-phenylethyl)-phenol werden in einem mit Rührer, Thermometer, Tropftrichter, Rückflußkühler und Einleitungsrohr für Stickstoff versehenen 6 1-Kolben, der durch eine Pilzheizhaube mit Temperaturregelung beheizt wird, 1129,4 g Phenol (12 Mol) und 11,3 g konzentrierte Schwefelsäure (nach Aufschmelzen des Phenols) vorgelegt und auf 100°C erwärmt. In 8 Stunden werden 2749,6 g Styrol (24 Mol mit 10 % Überschuß) zugetropft. Die Temperatur steigt dabei auf 125°C an. Zunächst wird eine Stunde bei dieser, dann 5 Stunden bei 150°C nachreagiert. Nach Abkühlen auf ca, 80°C werden zur Neutralisation der Schwefelsäure 4,8 g Magnesiumoxid zugesetzt und in 1 Stunde zur Reaktion gebracht.

Die Abtrennung des Hauptprodukts von Vorlauf und Rückstand erfolgt in einer Vakuumdestillation über eine Vigreux-Kolonne.

Bei einem Druck von 3 mbar und einer Sumpftemperatur auf 200°C steigend wird bei einer Siedetemperatur von maximal 150°C der Vorlauf abgetrennt. Die Menge beträgt 312,1 g. Es handelt sich vorwiegend um 1-Phenylethyl-phenol (OH-Zahl 270; $n_D^{20}$ 1,5936).

Die Destillation des 2,4-Di-(1-phenylethyl)-phenols wird bei einem Druck von 3 mbar und einer Sumpftemperatur von 210 bis 250°C durchgeführt. Die Siedetemperatur ist 170 bis 240°C. Es werden 3169,2 g Produkt erhalten (OH-Zahl 174, theoretisch 185; $n_D^{20}$ 1,6039). Die Ausbeute beträgt 87,3 %, bezogen auf eingesetztes Phenol.

Der Rückstand der Destillation in einer Menge von 218,5 g enthält neben den anorganischen Bestandteilen 2,4,6-Tri-(1-phenylethyl)-phenol. Der Rückstand wurde verworfen.

Zur Herstellung von Phosphorsäure-2,4-di-(1-phenylethyl)-phenyl-bis-phenyl-ester werden in einem mit Kapillare, Vigreux-Kolonne mit absteigendem Kühler und Thermometer versehenen 6 l-Kolben, der durch eine Pilzheizhaube mit Temperaturregler beheizt wird, 1934,8 g 2,4-Di-(1-phenylethyl)-phenol (6 Mol nach OH-Zahl 174), 1957,8 g Triphenylphosphat (6 Mol) und 10,1 g Natriumphenolat (0,09 Mol) auf 150°C erwärmt. Dann wird der Druck langsam auf 300 mbar zurückgenommen und auf 200°C erwärmt. Ein über die Kapillare eintretender Stickstoffstrom durchmischt den Kolbeninhalt. Nach ca. einer Stunde wird bei 200°C der Druck weiter auf 4 mbar zurückgenommen und in ca. 4 Stunden der größte Teil des sich abspaltenden Phenols abdestilliert. Danach wird in drei weiteren Stunden bei auf ca. 250°C steigender Temperatur und bei auf 5 mbar abfallendem Druck das Reaktionsgemisch ausgeheizt.

Als Destillat liegen 554,4 g kristallisiertes Produkt mit der OH-Zahl 589 vor. Es enthält 547,7 g Phenol (6 Mol Phenol: 567,7 g).

Der Rückstand im Kolben wird in Methylenchlorid aufgenommen und mit Wasser mehrmals gewaschen. Die Methylenchloridlösung wird dann getrocknet und eingeengt. Der harzige Rückstand beträgt 3089,9 g, die einer Ausbeute von 96,3 % entsprechen. Die OH-Zahl beträgt 0, der Phosphorgehalt 5,5 % (theoretisch 5,8 %). Das Produkt liegt praktisch vorwiegend als Phosphorsäure-2,4-di-(2-phenylethyl)-phenyl-bis-phenyl-ester vor.

Statt 2,4-Di-(1-phenylethyl)-phenol können z.B. auch 2,4-Di-benzyl-phenyl und 2,4-Di-(1-methyl-1-phenyl-ethyl) -phenol eingesetzt werden.

In dynamischen TGA-Messungen (Aufheizrate 10°C/Min.) wurde ermittelt, daß bei 290°C die gesamte flüchtige Menge des obigen erfindungsgemäßen Phosphats gegenüber Triphenylphosphat mit 100 % Gewichtsverlust ca. 6 Gew.-% beträgt.

Beispiel 2

Herstellung eines Gemischs von Phosphorsäure-2,4-di-(1-phenylethyl)-phenyl-bis-phenyl-ester und Phosphorsäure-phenyl-bis-1(1-phenylethyl)-phenyl)-ester

Zur Herstellung von 2,4-Di-(1-phenylethyl)-phenol und (1-Phenylethyl)-phenol werden in einem mit Rührer, Thermometer, Tropftrichter, Rückflußkühler und Einleitungsrohr für Stickstoff versehenen 6 l-Kolben, der durch eine Pilzheizhaube mit Temperaturregelung beheizt wird, 2823,4 g Phenol (30 Mol) und 100,0 g saurer Ionenaustauscher (Lewatit SPC 108 der Bayer AG, gequollen im Reaktionsgemisch eines zuvor hergestellten Ansatzes) vorgelegt und auf 55°C erwärmt. In 5 Stunden werden 2083,0 g Styrol (20 Mol) zugetropft. Die Temperatur steigt dabei auf 85°C an, Zunächst wird eine Stunde bei dieser, dann 2,5 Stunden bei 70°C nachreagiert. Anschließend wird der Ionenaustauscher abfiltriert.

Die Abtrennung des überschüssigen Phenols erfolgt in einer Vakuumdestillation über eine Vigreux-Kolonne. Bei einem Druck von 3 mbar und einer Sumpftemperatur auf 200°C steigend gehen bei einer Siedetemperatur von maximal 160°C 1273,0 g Phenol (13,5 Mol) über. Der Rückstand (3552,4 g, OH-Zahl 255) stellt das zur Umwandlung in den Phosphorsäureester vorgesehene Produkt dar. Eine Vakuumdestillation nach Beispiel 1 ergibt, daß er aus 2723,5 g (1-Phenylethyl)-phenol (13,7 Mol, OH-Zahl 280, theoretisch 283), 772,7 g 2,4-Di-(1-phenylethyl)-phenol (2,6 Mol, OH-Zahl 184, theoretisch 186) und 47,6 g 2,4,6-Tri-(1-phenylethyl)-phenol (0,1 Mol, OH-Zahl 146, theoretisch 138) besteht.

Zur Herstellung der Phosphorsäureester aus obigem Phenolgemisch werden in einem mit Kapillare, Vigreux-Kolonne mit Destillationsbrücke und Thermometer versehenen 6 l-Kolben, der durch eine Pilzheizhaube mit Temperaturregelung beheizt wird, 2589,7 g Phenolgemisch (1988,0 g (10,0 Mol) (1-Phenylethyl)-, 573,9 g (1,9 Mol) 2,4-Di-(1-phenylethyl)- und 29,7 g (0,07 Mol) 2,4,6-Tri-(1-phenylethyl)-phenol), 2284,1 g Triphenylphosphat (7 Mol) und 20,0 g Magnesiumchlorid (0,2 Mol) auf 150°C erwärmt, Dann wird der Druck langsam auf 300 mbar zurückgenommen und auf 200°C erwärmt. Ein über die Kapillare eintretender Stickstoffstrom durchmischt den Kolbeninhalt. Nach ca. einer Stunde wird bei 200°C der Druck weiter auf 4 mbar zurückgenommen und in ca. 6 Stunden der größte Teil des sich abspaltenden Phenols abdestilliert. Danach wird in zwei weiteren Stunden bei auf ca. 250°C steigender Temperatur und bei auf 3 mbar abfallendem Druck das Reaktionsgemisch ausgeheizt.

Als Destillat liegen 1112,8 g kristallisiertes Produkt mit der OH-Zahl 582 vor. Es enthält 1086,3 g Phenol (12,0 Mol Phenol: 1129,4 g).

Der Rückstand im Kolben wird in Methylenchlorid aufgenommen und mit Wasser mehrmals gewaschen. Die Methylenchloridlösung wird dann getrocknet und eingeengt. Der harzige Rückstand beträgt 3649,4 g, die einer Ausbeute von 97,0 % entsprechen. Die OH-Zahl beträgt 0, der Phosphorgehalt 5,4 % (theoretisch 5,8 %). Das Produkt liegt als obige Mischung vor. Es enthält außerdem kleine Mengen Phosphorsäure-2,4,6-tri-(1-phenylethyl)-phenyl-bis-phenyl-ester und Triphenylphosphat. Letzteres in einer Menge von 2,2 Gew.-%.

In dynamischen TGA-Messungen (Aufheizrate 10°/Min.) wurde ermittelt, daß bei 290°C die gesamte flüchtige Menge des obigen erfindungsgemäßen Phosphats gegenüber Triphenylphosphat mit 100 % Gewichtsverlust ca. 6 Gew.-% beträgt.

Herstellung und Prüfung der Formmassen:

Auf einem Banbury-Innenkneter (Fa. Pomini-Farrel) von Typ BR (1,2 l) oder Typ OOC (3 l) werden die jeweils benötigten Bestandteile bei 230 - 240°C in den in Tabelle 1 angegebenen Mengen (Angaben in Gewichtsteilen) gemischt und zu Granulat aufgearbeitet.

**Tabelle 1: Eingesetzte Komponenten (Angaben in Gew.-%)**

| Komponente | I. | II. | III. | IV. | V. | VI. | VII. | VIII. | IX. | X. | XI. |
|---|---|---|---|---|---|---|---|---|---|---|---|
| Vergleich 1 | 65,5 | | | 14,0 | 10,0 | 3,0 | | 7,5 | | | |
| Vergleich 2 | | 65,5 | | 14,0 | 4,0 | 4,0 | | 12,5 | | | |
| Vergleich 3 | 65,5 | | | 12,5 | 8,0 | 4,0 | | | | | 10,0 |
| Vergleich 4 | | 65,5 | | 10,5 | 4,0 | 4,0 | | | | | 16,0 |
| Vergleich 5 | 76,0 | | | | 10,0 | 4,0 | | 10,0 | | | |
| Vergleich 6 | | 72,0 | | | 10,0 | 4,0 | | 14,0 | | | |
| Beispiel 1 | 74,0 | | | | 10,0 | 4,0 | | | 12,0 | | |
| Beispiel 2 | 74,0 | | | | 10,0 | 4,0 | | | | 12,0 | |
| Beispiel 3 | 74,0 | | | | 10,0 | 4,0 | | | | | 12,0 |
| Beispiel 4 | 74,0 | | | | 4,0 | | 10,0 | | | | 12,0 |
| Beispiel 5 | | 65,0 | 9,0 | | 10,0 | 4,0 | | | | | 12,0 |
| Beispiel 6 | | 70,0 | | | 10,0 | 4,0 | | | 16,0 | | |
| Beispiel 7 | | 70,0 | | | 10,0 | 4,0 | | | | 16,0 | |
| Beispiel 8 | | 70,0 | | | 10,0 | 4,0 | | | | | 16,0 |
| Beispiel 9 | | 76,0 | | | 8,0 | 4,0 | | | | | 12,0 |
| Beispiel 10 | | 76,0 | | | 5,0 | 2,0 | 5,0 | | | | 12,0 |

Die Formmassen werden bei 260°C zu Prüfkörpern spritzgegossen (Aggregat: Werner Pfleiderer Schnecke DKS 275, Schließkraft 275 MP, Schneckendurchmesser 56 mm, Länge L/D-23/1) und folgenden Tests unterzogen:

- Schlagzähigkeit nach DIN 43 543 ($a_n$)
- Kerbschlagzähigkeit nach DIN 53 543 ($a_k$)
- Wärmeformbeständigkeit nach DIN 53 460 (Vicat B)
- Brandtest nach Vorschrift Underwriter Laboratories (UL 94)

Tabelle 2 zeigt die erhaltenen Prüfdaten.

Tabelle 2: Prüfdaten

| | $a_n$ | $a_k$ | Vicat B | UL 94 |
|---|---|---|---|---|
| | $kJ/m^2$ | $kJ/m^2$ | °C | 1,6 mm-Stab |
| Vergleich 1 | n.g.* | 17 | 101 | V-O |
| Vergleich 2 | n.g. | 11 | 86 | V-O |
| Vergleich 3 | n.g. | 12 | 98 | V-O |
| Vergleich 4 | n.g. | 5 | 87 | V-O |
| Vergleich 5 | n.g. | 18 | 89 | V-O |
| Vergleich 6 | n.g. | 24 | 86 | V-O |
| Beispiel 1 | n.g. | 20 | 90 | V-O |
| Beispiel 2 | n.g. | 17 | 91 | V-O |
| Beispiel 3 | n.g. | 19 | 89 | V-O |
| Beispiel 4 | n.g. | 20 | 89 | V-O |
| Beispiel 5 | n.g. | 21 | 89 | V-O |
| Beispiel 6 | n.g. | 24 | 90 | V-O |
| Beispiel 7 | n.g. | 23 | 92 | V-O |
| Beispiel 8 | n.g. | 25 | 89 | V-O |
| Beispiel 9 | n.g. | 26 | 99 | V-O |
| Beispiel 10 | n.g. | 24 | 99 | V-O |

* nicht gebrochen

Aus den Tabellen 1 und 2 geht hervor, daß auch in den erfindungsgemäßen Mischungen die eingesetzten schwerflüchtigen Phosphate in Gegewart üblicher Mengen Polytetrafluorethylen oder Silikonharz diesen einen Flammschutz geben, der die Beurteilung V-O bei 1,6 mm Prüfkörperdicke nach UL 94 zukommt.

Die Vergleichsbeispiele 1, 2, 5 und 6 stellen den Stand der Technik in Gegenwart (Vergleiche 1 und 2) und Abwesenheit (Vergleiche 5 und 6) eines thermoplastischen Copolymerisats (SAN) dar, das Flammschutzmittel ist das unter Compoundierbedingungen relativ leichtflüchtige Triphenylphosphat. Die Vergleichsbeispiele 3 und 4 enthalten ebenfalls ein thermoplastisches Polymerisat, statt Triphenylphosphat werden die schwerflüchtigen Phosphate der deutschen Patentanmeldung P 39 40 927 (LE A 27 145) verwendet, Die Kerbschlagzähigkeiten der Vergleichsbeispiele 3 und 4 liegen im Bereich von 5 bis 12 $kJ/m^2$.

Die Beispiele 1 bis 10 zeigen, daß in Gegenwart der erfindungsgemäßen schwerflüchtigen Phosphate aber in Abwesenheit von thermoplastischen Copolymerisaten, z.B. SAN, die Werte der Kerbschlagzähigkeit im Wesentlichen über

20 kJ/m$^2$ und damit höher als in Gegenwart von z.B. SAN liegen. Besonders deutlich sind die Unterschiede bei halogenfreien Einstellungen. Vergleich 4 hat eine Kerbschlagzähigkeit von 5 kJ/m$^2$, die Beispiele 6 - 10 solche von 23 bis 26 kJ/m$^2$.

**Patentansprüche**

**1.** Thermoplastische Polycarbonatformmassen bestehend aus

A) 40 - 90 Gewichtsteilen eines thermoplastischen aromatischen Polycarbonats,

B) 1 - 25 Gewichtsteilen Pfropfpolymerisat hergestellt aus

B.1) 5 - 70 Gewichtsteilen einer Mischung aus:

B.1.1) 50 - 95 Gew.-% Stylrol, α-Methylstyrol, Halogenstyrol, kernalkyliertem Styrol, Methylmethacrylat oder Mischungen daraus und

B.1.2) 5 - 50 Gew.-% (Meth)Acrylnitril, Methylmethacrylat, Maleinsäureanhydrid, N-substituiertem Maleinimid oder Mischungen daraus, auf

B.2) 30 - 95 Gewichtsteilen eines Kautschuks mit einer Glastemperatur TG ≤ 10°C,

C) 1 - 25 Gewichtsteilen, bezogen jeweils auf 100 Gewichtsteile der Gewichtssumme aus A) und B) einer Phosphorverbindung,

D) 0,05 - 10 Gewichtsteilen Antidrippingmittel, bestehend aus

D.1) 0,05 - 5 Gewichtsteilen bezogen auf 100 Gewichtsteile der Gewichtssumme aus A) und B) eines Tetrafluorethylenpolymerisats mit mittleren Teilchengrößen von 0,05 - 20 µm und einer Dichte von 1,2 - 1,9 g/cm$^3$, und/ oder

D.2) 0,1 - 10 Gewichtsteilen, bezogen jeweils auf 100 Gewichtsteile der Gewichtssumme aus A) und B), eines Silikonharzes der Summenformel (VI)

$$R_xSi(OR')_yO_{\frac{4-x-y}{2}} \qquad (VI)$$

worin

R für einen einwertigen Kohlenwasserstoffrest steht, der gegebenenfalls selbst substituiert sein kann,

R' eine Alkylgruppe oder ein Wasserstoffrest ist,

x einen Wert von 0,75 bis 1,75 und

y einen Wert von 0,0001 bis 0,5 besitzen

und worin das Silikonharz aufgebaut ist aus Einheiten der Formel $SiO_{4/2}$, $RSiO_{3/2}$, $R_2SiO_{2/2}$ und/oder $R_3SiO_{1/2}$,

wobei sie als Phosphorverbindungen C) solche der Formel (I) enthalten,

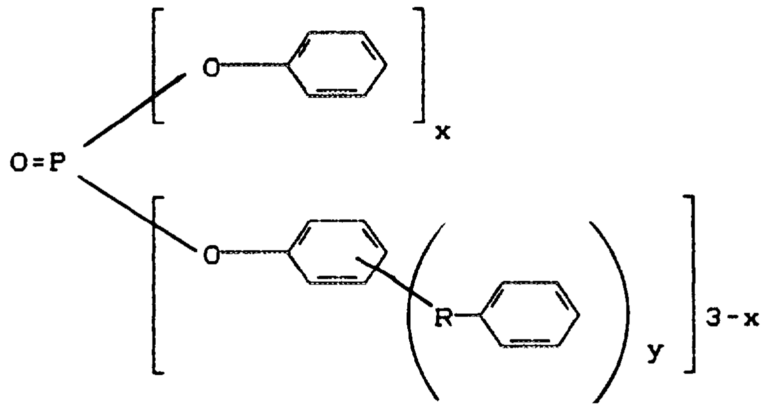

(I)

worin

R eine direkte Bindung, eine

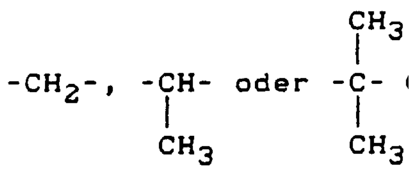

Gruppe ist,

x gleich 0 oder 1 oder 2 für den Fall y gleich 1 ist oder
x gleich 2 für den Fall y gleich 2 ist und die Aromaten auch Alkyl substituiert sein können.

2. Formmassen gemäß Anspruch 1, dadurch gekennzeichnet, daß die Komponente C) in Mengen von 2 bis 20 Gew.-Teilen vorliegt.

3. Thermoplastische Polycarbonatformmassen gemäß Anspruch 1, dadurch gekennzeichnet, daß die Komponente A) ein thermoplastisches Polycarbonat auf Basis der Diphenole der Formel (IV)

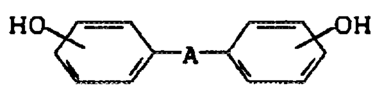

(IV)

und gegebenenfalls der Formel (IVa)

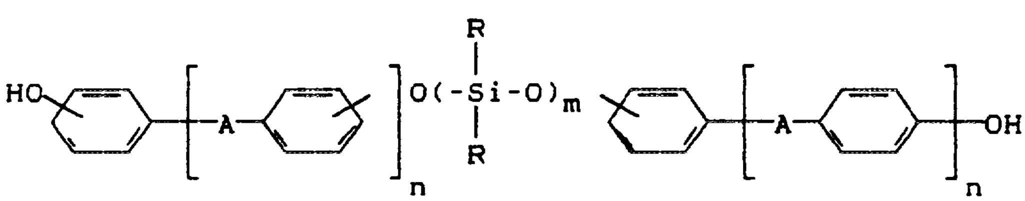

(IVa)

ist, worin

A eine Einfachbindung, $C_1$-$C_5$-Alkylen, ein $C_2$-$C_5$-Alkyliden, ein $C_5$-$C_6$-Cycloalkyliden, das noch durch Methylgruppen substituiert sein kann, -O-, -S- oder $SO_2$- ist, die aromatischen Bereiche durch Halogenatome substituiert sein können, n = 1 oder null ist, die R's gleich oder verschieden sind und ein lineares $C_1$-$C_{20}$-Alkyl, verzweigtes $C_3$-$C_{20}$-Alkyl oder $C_6$-$C_{20}$-Aryl sind und m eine Zahl zwischen 5 und 100 ist, und wobei der Gewichtsanteil an Diphenolen der Formel (IVa) in den Copolycarbonaten jeweils so bemessen ist, daß der Gehalt an Diorganosiloxy-Einheiten (V)

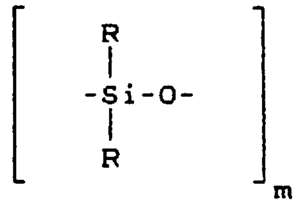 (V)

in Polycarbonat A) zwischen 1 und 25 Gew.-% beträgt.

**4.** Polycarbonatformmassen gemäß Anspruch 1, dadurch gekennzeichnet, daß die Komponente A) ein Gemisch aus siloxanhaltigen Polycarbonaten und siloxanfreien Polycarbonaten ist.

**5.** Formmassen gemäß Anspruch 1, dadurch gekennzeichnet, daß B) aus B.1) 15 bis 60 Gewichtsteilen einer Mischung B.1.1) und B.1.2) und B.2) 40 bis 85 Gewichtsteilen hergestellt ist.

**6.** Formmassen gemäß Anspruch 1, dadurch gekennzeichnet, daß die Komponente D.1) in Mengen von 0,1 bis 1,0 Gew.-Teilen vorliegt.

**7.** Formmassen gemäß Anspruch 1, dadurch gekennzeichnet, daß die Komponente D.1) als koagulierte Mischung von Emulsionen der Tetrafluorethylenpolymerisate D.1) mit Emulsionen der Pfropfpolymerisate B) eingesetzt wird, worin das Gewichtsverhältnis Pfropfpolymerisat B) zum Tetrafluorethylenpolymerisat D.1) zwischen 95 : 5 und 60 : 40 liegt und der Gehalt an Cofällung von B) und D.1), bezogen auf 100 Gewichtsteile A) und B), zwischen 0,1 und 20,0 Gewichtsteilen liegt.

**8.** Formmassen gemäß Anspruch 1, dadurch gekennzeichnet, daß die Komponente D.2) in Mengen von 0,2 bis 3,0 Gew.-Teilen vorliegt.

**9.** Formmassen gemäß Anspruch 1, dadurch gekennzeichnet, daß die Komponente D.2) als koagulierte Mischung von Emulsionen des Silikonharzes D.2), gegebenenfalls auch eine Emulsion einer Lösung von ihm, mit Emulsionen der Pfropfpolymerisate B) eingesetzt wird, worin das Gewichtsverhältnis Pfropfpolymerisat B) zum Silikonharz D.2) zwischen 99,9 : 0,1 und 50 : 50 liegt und der Gehalt an Cofällung von B) und D.2) bezogen auf 100 Gewichtsteile A) und B) zwischen 0,1 und 30,0 Gewichtsteilen liegt.

**10.** Formmassen gemäß Anspruch 1, bestehend zusätzlich aus thermoplastischen Polysulfonen, thermoplastischen Polyethersulfonen, thermoplastischen Polyketonen, thermoplastischen Polyetherketonen, thermoplastischen Polyphenylenethern, thermoplastischen Polyarylensulfiden, Stabilisatoren, Pigmenten, Fließmitteln, Antistatika und/oder anderen Flammschutzmitteln.

**11.** Verfahren zur Herstellung der Polycarbonatformmassen der Ansprüche 1 bis 10, wobei man die Komponenten A), B), C), D), gegebenenfalls thermoplastische Polysulfone, thermoplastische Polyethersulfone, thermoplastische Polyketone, thermoplastische Polyetherketone, thermoplastische Polyphenylenether, thermoplastische Polyarylensulfide, Stabilisatoren, Pigmente, Fließmittel, Entformungsmittel, Antistatika und/ oder andere Flammschutzmittel in bekannter Weise vermischt und danach bei Temperaturen von 200°C bis 330°C in üblichen Aggregaten schmelzcompoundiert oder schmelzextrudiert, oder daß man die Lösungen der jeweiligen der vorstehend genannten Bestandteile in geeigneten organischen Lösungsmitteln mischt und die Lösungsgemische in üblichen Aggregaten eindampft.

## Claims

**1.** Thermoplastic polycarbonate moulding compositions consisting of

A) 40-90 parts by weight of a thermoplastic aromatic polycarbonate,

B) 1-25 parts by weight of graft polymer produced from

B.1) 5-70 parts by weight of a mixture prepared from:

B.1.1) 50-95 wt.% of styrene, α-methylstyrene, halogenated styrene, ring-alkylated styrene, methyl methacrylate or mixtures thereof and

B.1.2) 5-50 wt.% of (meth)acrylonitrile, methyl methacrylate, maleic anhydride, N-substituted maleimide or mixtures thereof, on

B.2) 30-95 parts by weight of a rubber with a glass transition temperature $T_g \leq 10°C$,

C) 1-25 parts by weight, relative in each case to 100 parts by weight of the sum of the weights of A) and B), of a phosphorus compound,

D) 0.05-10 parts by weight of anti-dripping agent, consisting of

D.1) 0.05-5 parts by weight, relative to 100 parts by weight of the sum of the weights of A) and B), of a tetrafluoroethylene polymer with average particle sizes of 0.05-20 µm and a density of 1.2-1.9 g/cm$^3$ and/or

D.2) 0.1-10 parts by weight, relative in each case to 100 parts by weight of the sum of the weights of A) and B), of a silicone resin of the empirical formula (VI)

$$R_xSi(OR')_yO_{\frac{4-x-y}{2}} \qquad \text{(VI)}$$

in which

R denotes a monovalent hydrocarbon residue which may itself optionally be substituted,

R' is an alkyl group or a hydrogen residue,

x has a value from 0.75 to 1.75 and

y has a value of 0.0001 to 0.5

and in which the silicone resin is composed of units of the formula $SiO_{4/2}$, $RSiO_{3/2}$, $R_2SiO_{2/2}$ and/or $R_3SiO_{1/2}$,

wherein the phosphorus compounds C) they contain are those of the formula (I),

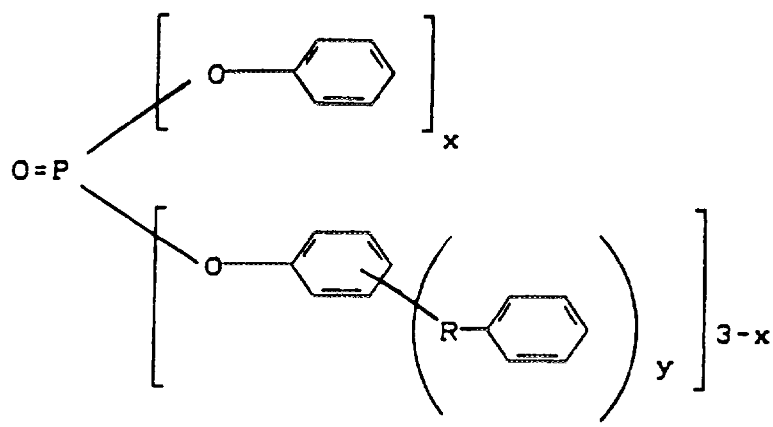

(I)

in which

R is a direct bond, a

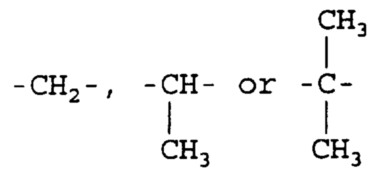

group

x is equal to 0 or 1 or 2 in the event that y is equal to 1 or

x is equal to 2 in the event that y is equal to 2 and the aromatic groups may also be alkyl-substituted.

**2.** Moulding compositions according to claim 1, characterised in that component C) is present in quantities of 2 to 20 parts by weight.

**3.** Thermoplastic polycarbonate moulding compositions according to claim 1, characterised in that component A) is a thermoplastic polycarbonate based on diphenols of the formula (IV)

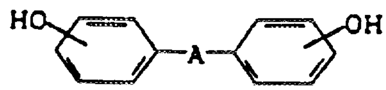

(IV)

and optionally of the formula (IVa)

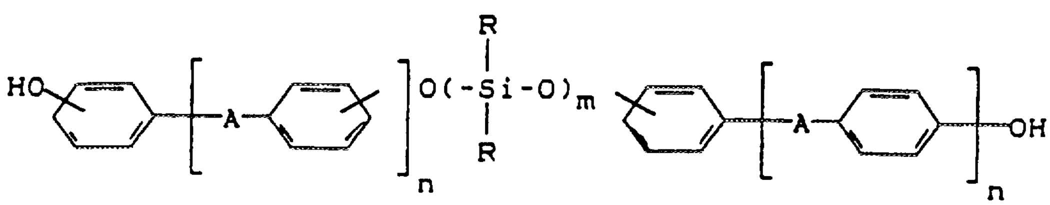

(IVa)

in which

A is a single bond, $C_1$-$C_5$ alkylene, a $C_2$-$C_5$ alkylidene, a $C_5$-$C_6$ cycloalkylidene, which may be further substituted by methyl groups, is -O-, -S-or -$SO_2$-, the aromatic regions may be substituted by halogen atoms, n is 1 or zero, the residues R are identical or different and are a linear $C_1$-$C_{20}$ alkyl, branched $C_3$-$C_{20}$ alkyl or $C_6$-$C_{20}$ aryl and m is a number between 5 and 100, and wherein the proportion by weight of diphenols of the formula (IVa) in the copolycarbonates is in each case calculated such that the content of diorganosiloxy units (V)

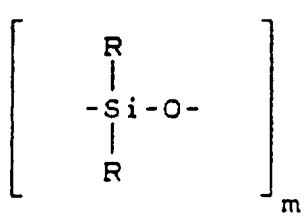

(V)

in polycarbonate A) is between 1 and 25 wt.%.

**4.** Polycarbonate moulding compositions according to claim 1, characterised in that component A) is a mixture of siloxane-containing polycarbonates and siloxane-free polycarbonates.

**5.** Moulding compositions according to claim 1, characterised in that B) is produced from B.1) : 15 to 60 parts by weight of a mixture of B.1.1) and B.1.2) and B.2): 40 to 85 parts by weight.

**6.** Moulding compositions according to claim 1, characterised in that component D.1) is present in quantities of 0.1 to 1.0 parts by weight.

**7.** Moulding compositions according to claim 1, characterised in that component D.1) is used as a coagulated mixture

of emulsions of the tetrafluoroethylene polymers D.1) with emulsions of the graft polymer B), in which the weight ratio of graft polymer B) to the tetrafluoroethylene polymer D.1) is between 95:5 and 60:40 and the content of coprecipitate of B) and D.1) is between 0.1 and 20.0 parts by weight, relative to 100 parts by weight of A) and B).

**8.** Moulding compositions according to claim 1, characterised in that component D.2) is present in quantities of 0.2 to 3.0 parts by weight.

**9.** Moulding compositions according to claim 1, characterised in that component D.2) is used as a coagulated mixture of emulsions of the silicone resin D.2), optionally also an emulsion of a solution thereof, with emulsions of the graft polymers B), in which the weight ratio of graft polymer B) to the silicone resin D.2) is between 99.9:0.1 and 50:50 and the content of coprecipitate of B) and D.2) is between 0.1 and 30.0 parts by weight, relative to 100 parts by weight of A) and B).

**10.** Moulding compositions according to claim 1, additionally consisting of thermoplastic polysulphones, thermoplastic polyethersulphones, thermoplastic polyketones, thermoplastic polyetherketones, thermoplastic polyphenylene ethers, thermoplastic polyarylene sulphides, stabilisers, pigments, plasticisers, anti-static agents and/or other flame retardants.

**11.** Process for the production of the polycarbonate moulding compositions according to claims 1 to 10, wherein components A), B), C), D), optionally thermoplastic polysulphones, thermoplastic polyethersulphones, thermoplastic polyketones, thermoplastic polyetherketones, thermoplastic polyphenylene ethers, thermoplastic polyarylene sulphides, stabilisers, pigments, plasticisers, mould release agents, anti-static agents and/or other flame retardants are mixed together in a known manner and then melt compounded or melt extruded in conventional apparatus at temperatures of 200°C to 330°C, or solutions of the above-stated components in suitable organic solvents are mixed and the solvent mixtures are evaporated in conventional apparatus.

**Revendications**

**1.** Matières à mouler en polycarbonates thermoplastiques consistant en :

A) 40 à 90 parties en poids d'un polycarbonate aromatique thermoplastique,
B) 1 à 25 parties en poids d'un polymère greffé préparé à partir de

B.1) 5 à 70 parties en poids d'un mélange de

B.1.1) 50 à 95 % en poids de styrène, d'$\alpha$-méthylstyrène, d'un styrène halogéné, d'un styrène alkylé dans le noyau, de méthacrylate de méthyle ou leurs mélanges et
B.1.2) 5 à 50 % en poids de (méth)acrylonitrile, de méthacrylate de méthyle, d'anhydride maléique, d'un maléimide substitué à l'azote ou leurs mélanges, sur

B.2) 30 à 95 parties en poids d'un caoutchouc ayant une température de transition du second ordre TG $\leq$ 10°C,

C) 1 à 25 parties en poids, pour 100 parties en poids du total de A) et B), d'un composé du phosphore,
D) 0,05 à 10 parties en poids d'un agent évitant le gouttage de la matière en fusion en cas d'incendie, et qui consiste en

D.1) 0,05 à 5 parties en poids pour 100 parties en poids du total de A) et B), d'un polymère du tétrafluoréthylènc à des dimcnsions dc particules moyennes de 0,05 à 20 µm et à une densité de 1,2 à 1,9 g/cm$^3$, et/ou
D.2) 0,1 à 10 parties cn poids pour 100 parties en poids du total de A) et B), d'une résine de silicone de formule globale (VI),

$$R_xSi(OR')_yO_{\frac{4-x-y}{2}} \qquad \text{(VI)}$$

dans laquelle

R représente un radical hydrocarboné monovalent éventuellement substitué,
R' représente un groupe alkyle ou l'hydrogène,
x est un nombre allant de 0,75 à 1,75 et
y est un nombre allant de 0,0001 à 0,5,

la résine de silicone étant constituée de motifs de formules $SiO_{4/2}$, $RSiO_{3/2}$, $R_2SiO_{2/2}$ et/ou $R_3SiO_{1/2}$, ces matières à mouler contenant en tant que composés du phosphore C) des composés de formule (I)

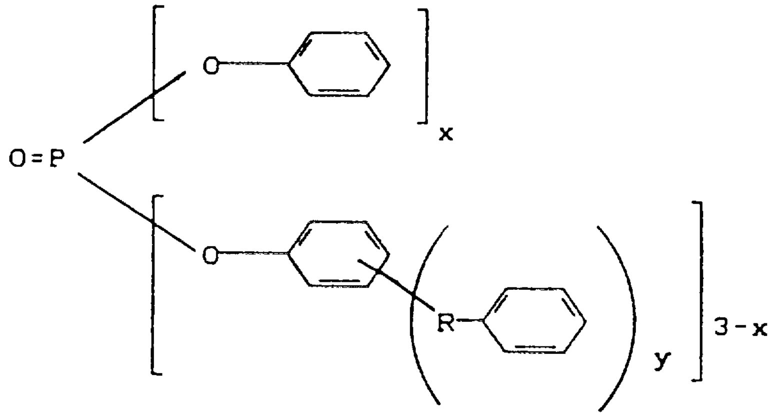

(I)

dans laquelle

R représente une liaison directe, un groupe

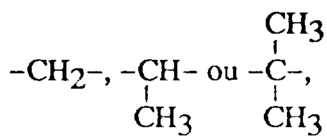

x est égal à 0 ou 1 ou bien encore à 2 lorsque y est égal à 1, ou bien
x est égal à 2 lorsque y est égal à 2,

les radicaux aromatiques pouvant porter des substituants alkyle.

2. Matières à mouler selon revendication 1, caractérisées en ce que le composant C) est présent en quantité de 2 à 20 parties en poids.

3. Matières à mouler en polycarbonates thermoplastiques selon revendication 1, caractérisées en ce que le composant A) est un polycarbonate thermoplastique à base de diphénols de formule (IV)

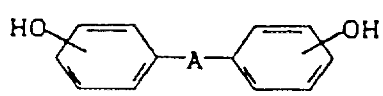

(IV)

et le cas échéant de formule (IVa)

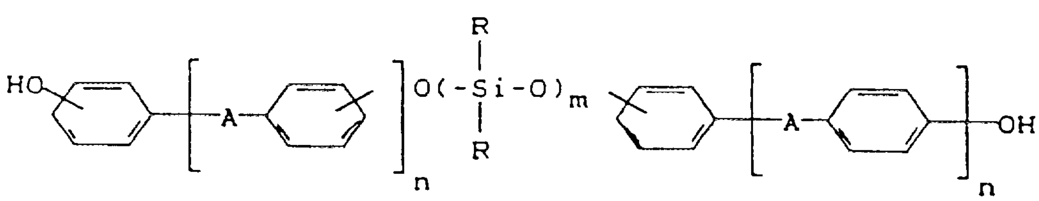

(IVa)

dans lesquelles

A représente une liaison simple, un groupe alkylène en $C_1$-$C_5$, alkylidène en $C_2$-$C_5$, cycloalkylidène en $C_5$-$C_6$, qui peut encore être substitué par des groupes méthyle, -O-, -S- ou -$SO_2$-, les parties aromatiques pouvant être substituées par des atomes d'halogènes, n est égal à 1 ou à 0, les symboles R, ayant des significations identiques ou différentes, représentent chacun un groupe alkyle à chaîne droite en $C_1$-$C_{20}$, un groupe alkyle ramifié en $C_3$-$C_{20}$ ou un groupe aryle en $C_6$-$C_{20}$, et m est un nombre allant de 5 à 100, la proportion en poids des diphénols de formule (IVa) dans les copolycarbonates étant réglée dans tous les cas en sorte que la teneur en motifs diorganosiloxy (V)

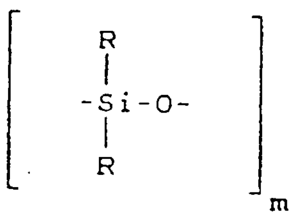

(V)

dans le polycarbonate A) se situe entre 1 et 25 % en poids.

**4.** Matières à mouler en polycarbonates selon revendication 1, caractérisées en ce que le composant A) consiste en un mélange de polycarbonates contenant des siloxanes et de polycarbonates exempts de siloxanes.

**5.** Matières à mouler selon revendication 1, caractérisées en ce que B) est préparé à partir de B.1) 15 à 60 parties en poids d'un mélange de B.1.1) et de B.1.2), et de B.2) 40 à 85 parties en poids.

**6.** Matières à mouler selon revendication 1, caractérisées en ce que le composant D.1) est présent en quantité de 0,1 à 1,0 partie en poids.

**7.** Matières à mouler selon revendication 1, caractérisées en ce que le composant D.1) est utilisé à l'état de mélange coagulé d'une émulsion du polymère du tétrafluoréthylène D.1) et d'une émulsion du polymère greffé B), à des rapports en poids de 95:5 à 60:40 entre le polymère greffé B) et le polymère du tétrafluoréthylène D.1), la teneur en le coprécipité de B) et D.1), pour 100 parties en poids de A) et B), étant de 0,1 à 20,0 parties en poids.

**8.** Matières à mouler selon revendication 1, caractérisées en ce que le composant D.2) est présent en quantité de 0,2 à 3,0 parties en poids.

**9.** Matières à mouler selon revendication 1, caractérisées en ce que le composant D.2) est mis en oeuvre à l'état de mélange coagulé d'une émulsion de la résine de silicone D.2) et, le cas échéant également, d'une émulsion d'une solution de cette résine, avec une émulsion du polymère greffé B), le rapport en poids entre le polymère greffé B) et la résine de silicone D.2) allant de 99,9:0,1 à 50:50 et la teneur en le coprécipité de B) et D.2), pour 100 parties en poids de A) et B), se situant entre 0,1 et 30,0 parties en poids.

**10.** Matières à mouler selon revendication 1, qui consistent en outre en polysulfones thermoplastiques, polyéthersulfones thermoplastiques, polycétones thermoplastiques, polyéthercétones thermoplastiques, éthers de polyphénylène thermoplastiques, sulfures de polyarylène thermoplastiques, stabilisants, pigments, agents fluidifiants, agents antistatiques et/ou autres agents ignifugeants.

**11.** Procédé de préparation des matières à mouler en polycarbonates des revendications 1 à 10, dans lequel on mélange de manière connue les composants A), B), C), D) et, le cas échéant, des polysulfones thermoplastiques, des polyéthersulfones thermoplastiques, des polycétones thermoplastiques, des polyéthercétones thermoplastiques, des éthers de polyphénylène thermoplastiques, des sulfures de polyarylène thermoplastiques, des stabilisants, des pigments, des agents fluidifiants, des agents de démoulage, des agents antistatiques et/ou d'autres agents ignifugeants puis on poursuit le mélange ou on extrude à l'état fondu à des températures de 200 à 330°C dans des appareillages usuels, ou bien on mélange des solutions des divers constituants dans des solvants organiques appropriés puis on évapore les mélanges de solvants dans des appareillages usuels.